# EUROPÄISCHE PATENTSCHRIFT

(11) **EP 3 505 396 B1**
(45) Veröffentlichungstag und Bekanntmachung des Hinweises auf die Patenterteilung: **08.04.2020**
(21) Anmeldenummer: 17210716.1
(22) Anmeldetag: 27.12.2017
(51) Int. Cl.: B60Q 1/076

(54) **ZENTRALSCHWENKBEREICH**
CENTRAL PIVOT AREA
ZONE DE PIVOTEMENT CENTRALE

(43) Veröffentlichungstag der Anmeldung: 03.07.2019
(73) Patentinhaber: ZKW Group GmbH, 3250 Wieselburg (AT)
(72) Erfinder: Jackl, Christian, 3250 Wieselburg (AT); Hungendorfer, Martin, 3642 Häusling/Dunkelsteinerwald (AT); Mayer, Matthias, 3240 Mank (AT)
(74) Vertreter: Patentanwaltskanzlei Matschnig & Forsthuber OG

(56) Entgegenhaltungen:
- EP-A1- 2 796 320
- WO-A1-2017/001143
- DE-A1-102009 033 910

## Beschreibung

Die Erfindung betrifft einen Scheinwerfer, insbesondere Kraftfahrzeugscheinwerfer, mit einem Gehäuse, einer Anzahl von Tragrahmen, die in dem Gehäuse verstellbar gelagert sind und in denen jeweils (zumindest) ein optisches Bauelement gehalten ist, nämlich einem ersten Tragrahmen sowie zumindest einem weiteren Tragrahmen, und mit einer Einstelleinrichtung, welche zum gemeinsamen Verstellen der Tragrahmen durch Verschwenken um jeweils zumindest eine Achse relativ zu dem Gehäuse eingerichtet ist und welche ein durch einen Stellantrieb betätigtes Getriebe umfasst, das mit den Tragrahmen jeweils über eine Gelenkankopplung verbunden ist.

Fahrzeugscheinwerfer mit einstellbaren optischen Bauelementen, insbesondere einstellbar zum Verstellen der Richtung des aus dem Scheinwerfer austretenden Lichtes, sind aus dem Stand der Technik wohlbekannt. Die Verschwenkbarkeit eines Lichtmoduls kann beispielsweise zum Einstellen einer Leuchtweite des Schweinwerfers (horizontales Verschwenken) oder zum Nachführen bei einem Kurvenlicht (vertikales Verschwenken) dienen. Die optischen Bauelemente des Scheinwerfers der Erfindung sind vorzugsweise Lichtmodule; jedoch kann (jeweils) ein optisches Bauelement im Allgemeinen als lichtgebende Komponente, wie eine Leuchteinheit, Laserlichtquelle oder ein vollständiges Lichtmodul, oder auch als lichtformende Komponente, wie ein Reflektor, eine Linse, oder Kombinationen von Linsen und/oder Reflektoren, ausgebildet sein. Weiters können auch Sensoren (Radar, Lidar, Infrarot Emitter/Empfänger usw.) und Kameras, zum Erfassen von Verkehrsteilnehmer, Fahrbahnzuständen, Personen damit justiert werden.

Beispielsweise ist in EP 2 796 320 A1 ein Kraftfahrzeugscheinwerfer mit zwei um zwei Achsen schwenkbaren Lichtmodulen beschrieben, die über eine Koppelmechanik beweglich miteinander verbunden sind, wobei die Koppelmechanik einen zweiseitigen Hebel und zwei Kopplungsstangen beinhaltet, welche eine kinematische Kopplungskette bilden, um ein gemeinsames Verstellen der beiden Lichtmodule zu ermöglichen. Zusätzlich kann der Lagerpunkt des Hebels verstellt werden, was ein Justieren des zweiten Lichtmoduls ohne Rückwirkung auf das erste Lichtmodul gestattet. DE 10.2009.033.910 offenbart einen Scheinwerfer gemäß dem Oberbegriff des Anspruchs 1.

Die bekannten Einstellsysteme sehen jedoch eine große Anzahl von Komponenten in der Koppelmechanik vor, was die Zuverlässigkeit und Genauigkeit der Koppelmechanik beeinträchtigen kann. Zudem tritt häufig das Problem auf, dass die Lichtmodule bzw. Tragrahmen nicht in gleichem Ausmaß durch den Stellantrieb verstellt werden, sodass es zu einem sogenannten Winkelfehler zwischen den Verstellwinkeln der (zwei oder mehr) Lichtmodule bzw. Tragrahmen kommt.

Es ist daher eine Aufgabe der vorliegenden Erfindung, einen Scheinwerfer mit einer verbesserten Einstelleinrichtung zu schaffen, um die genannten Nachteile zu beseitigen. Im Besonderen soll die Einstelleinrichtung ein gleichzeitiges Justieren der zwei oder mehr optischen Bauelemente (insbesondere Lichtmodule) ermöglichen, wobei eine Möglichkeit zum Ausgleichen bzw. Vermeiden von Winkelfehlern erzielt werden soll.

Diese Aufgabe wird durch einen Scheinwerfer bzw. eine Einstelleinrichtung der eingangs genannten Art gelöst, worin das Getriebe ein mehrschalig konzentrisches Kugelgelenk aufweist, in dem ein Anbindungselement des Stellantriebs sowie jeweils einem der Tragrahmen zugeordnete Anbindungselemente konzentrisch gekoppelt sind, wobei das Anbindungselement des ersten Tragrahmens mit dem ersten Tragrahmen starr verbunden ist, während für den bzw. jeden der weiteren Tragrahmen das diesem zugeordnete Anbindungselement unmittelbar oder getriebemäßig mit der Gelenkankopplung des jeweiligen Tragrahmens verbunden ist.

Gemäß dieser erfindungsgemäßen Lösung ist der Stellantrieb an einem Knotenpunkt des Getriebes der Einstelleinrichtung angebunden, nämlich an einem konzentrischen mehrschaligen Kugelgelenklager. An dem Knotenpunkt sind zugleich über konzentrische Anbindungselemente die Stellmechanismen der zwei oder mehr Lichtmodule bzw. Tragrahmen angekoppelt. Es ergibt sich so an dem Knotenpunkt ein zwiebelschalenartiger Aufbau der Gelenkskomponenten.

Diese technische Lösung verringert zudem die Anzahl der beweglichen Komponenten in dem Getriebe der Einstelleinrichtung, was die Zuverlässigkeit erhöht und die Genauigkeit der erreichbaren Einstellung des Lichtmoduls (im Allgemeinen des optischen Bauelements) verbessert. Nicht zuletzt wird durch die erfindungsgemäße Auslegung des konzentrischen Kugelgelenks erreicht, dass die Stellbewegung des Stellantriebs sich in gleicher Weise auf die Verstellung der so verstellten Tragrahmen (Lichtmodule) auswirkt. Somit wird durch die Erfindung ein weitgehendes Entfallen von Winkelfehlern erzielt.

In einer zweckmäßigen Weiterbildung ist es zur Vermeidung von Winkelfehlern zusätzlich günstig, wenn das Kugelgelenk in einer Ausnehmung des ersten Tragrahmens aufgenommen ist. Diese Ausnehmung ist bevorzugt an einer Außenseite des Tragrahmens vorgesehen, um zu vermeiden, dass das im Tragrahmen gehaltene optische Bauelement teilweise oder gänzlich verdeckt wird.

Der zweite oder überhaupt jeder der weiteren Tragrahmen kann mit dem ihm jeweils zugeordneten Anbindungselement über ein Untergetriebe verbunden sein. Dadurch kann ein gleichzeitiges Einstellen der Tragrahmen durch die Einstelleinrichtung erreicht werden, wobei die Auslenkung des Stellantriebs in auf den jeweiligen Tragrahmen angepasste Art (Wegbetrag, Richtung) umgesetzt werden kann. Insbesondere kann dies das Unterbinden von Winkelfehlern zusätzlich erleichtern.

Hierbei kann ein derartiges Untergetriebe eine Verstelleinrichtung aufweisen, die dazu eingerichtet ist, den Ort der Lagerung eines Koppelbauteils des Untergetriebes zu verstellen. dadurch ergibt sich eine zusätzliche Verstellung des betroffenen Tragrahmens, ohne dass sich dies über die Mechanik der erfindungsgemäßen Einstelleinrichtung auf den/ die anderen Tragrahmen auswirkt. Die hierbei verwendeten Untergetriebe sind bevorzugt als Koppelgetriebe ausgeführt ist, im Besonderen als offene kinematische Kette.

In einer günstigen Auslegung des erfindungsgemäßen mehrschaligen Kugelgelenks kann vorgesehen sein, dass das Anbindungselement des Stellantriebs als im Zentrum des Kugelgelenks angeordneter Gelenkkopf ausgebildet ist. Dieser Gelenkkopf kann insbesondere als Endstück einer Stellstange des Stellantriebs ausgebildet sein; er kann auf dieser z.B. fest angebracht oder mit ihr einstückig sein. Für einen betriebssicheren Aufbau des Kugelgelenks ist insbesondere eine weitere Ausgestaltung vorteilhaft, bei der im montierten Zustand des Kugelgelenks das Anbindungselement des ersten Tragrahmens zusammen mit (zumindest) einem weiteren Anbindungselement den Gelenkkopf umgibt, wobei ein Herausziehen des Gelenkkopfes aus dem Kugelgelenk durch Formschluss unterbunden ist.

Die optischen Bauelemente, die in den Tragrahmen gehalten sind, können sämtlich oder zum Teil Lichtmodule mit jeweils zumindest einer Lichtquelle sein.

Die Erfindung samt weiteren Ausbildungen und Vorzügen wird im Folgenden anhand einer Ausführungsform näher erläutert, welche in den beigefügten Zeichnungen dargestellt ist. Die Zeichnungen zeigen:
- Fig. 1: einen Scheinwerfer mit einer Einstelleinrichtung gemäß der Ausführungsform der Erfindung in einer schematischen Darstellung;
- Fig. 2: die Einstelleinrichtung der Ausführungsform einschließlich darin gehaltener Lichtmodule in einer Seitenansicht;
- Fig. 3: die Einstelleinrichtung der Fig. 2 in einer perspektivischen Explosionsansicht; und
- Fig. 4: die Einstelleinrichtung der Fig. 2 in Seitenansicht.

Es versteht sich, dass die hier beschriebene Ausführungsform lediglich der Illustration dient und nicht als für die Erfindung einschränkend aufzufassen ist; vielmehr fallen unter den Schutzbereich der Erfindung sämtliche Ausgestaltungen, die der Fachmann anhand der Beschreibung finden kann, wobei der Schutzbereich durch die Ansprüche festgelegt ist.

In den folgenden Figuren werden für gleiche oder vergleichbare Elemente zum Zwecke der einfacheren Erläuterung und Darstellung gleiche Bezugszeichen verwendet. Zudem sollen die in den Ansprüchen verwendeten Bezugszeichen lediglich die Lesbarkeit der Ansprüche und das Verständnis der Erfindung erleichtern und haben keinesfalls einen den Schutzumfang der Erfindung einschränkenden Charakter. Wo in dieser Offenbarung - insbesondere in den Ansprüchen - Begriffe der räumlichen Lage wie "oben", "über", "unterhalb", "vorne", "horizontal", "vertikal" und diesen entsprechende Bezeichnungen verwendet werden, beziehen sich diese lediglich auf eine Orientierung des Scheinwerfers wie in den hier vorliegenden Zeichnungen wiedergegeben, und es versteht sich, dass die Orientierung in einer tatsächlichen Einbaulage eines Scheinwerfers bzw. seiner Komponenten eine andere sein kann, ohne dass dies eine Abweichung vom Schutzumfang begründen kann.

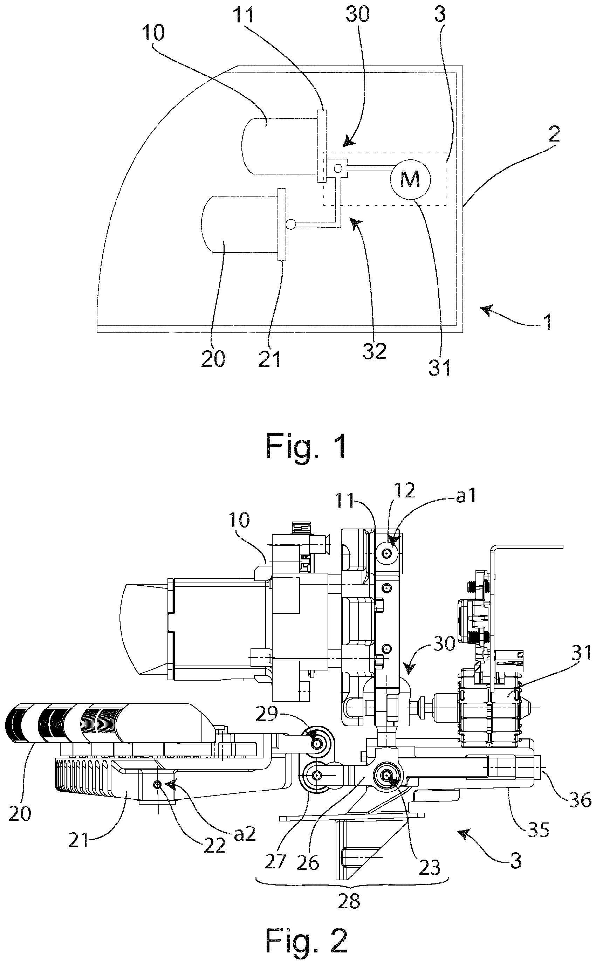

In Fig. 1 ist in stark schematisierter Darstellung ein erfindungsgemäßer Scheinwerfer dargestellt, der in seiner Gesamtheit mit dem Bezugszeichen 1 bezeichnet ist. Der Scheinwerfer 1 des dargestellten Ausführungsbeispiels ist als KFZ-Scheinwerfer ausgebildet. Der Scheinwerfer 1 umfasst ein Gehäuse 2, dessen Material (z.B. Kunststoff) und Formgebung je nach Anwendung gestaltet sein kann und für die Erfindung nicht näher von Belang ist. Der Scheinwerfer 1 umfasst des Weiteren mehrere - im gezeigten Ausführungsbeispiel zwei - Lichtmodule 10, 20, die in dem gezeigten Ausführungsbeispiel jeweils ein (einstellbares) optische Bauelement repräsentieren und die in jeweils zugeordneten Tragrahmen 11, 21 gehalten sind. Beispielsweise ist das erste Lichtmodul als LED-Abblendlicht-Modul ausgeführt, und das zweite Lichtmodul 20 ist als Laser-Fernlicht-Modul ausgebildet; natürlich können die Lichtmodule in anderen Ausführungen der Erfindung anderer Art sein und insbesondere auch andere Lichtfunktionen beinhalten bzw. weitere Lichtquellenarten (z.B. Xenon) beinhalten.

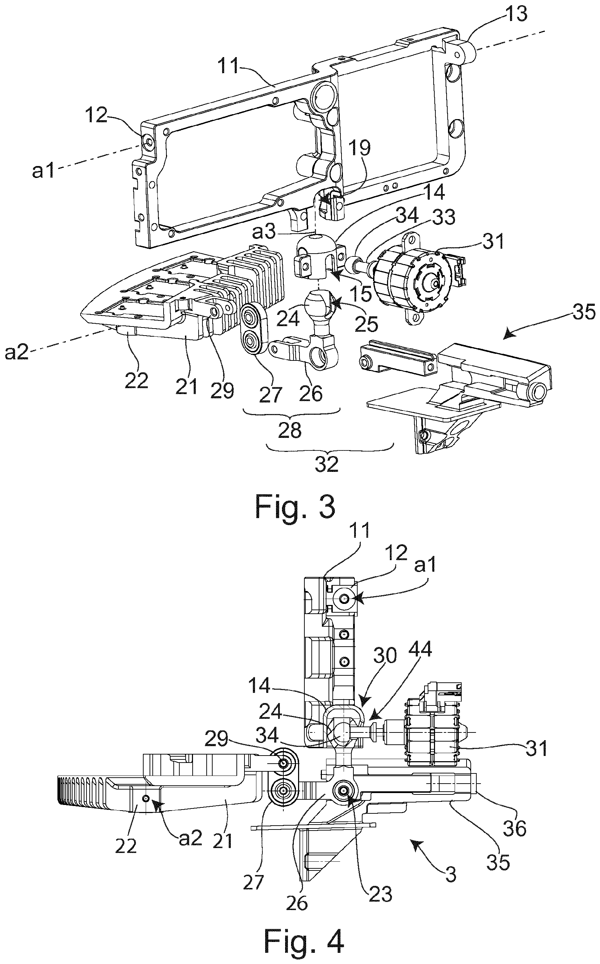

Jeder der Tragrahmen 11, 21 ist innerhalb des Gehäuses 2 um zumindest eine Schwenkachse a1, a2 (Fig. 3) gelagert. Beispielsweise kann durch eine Nickbewegung um eine horizontale Achse eine Neigung der Lichtmodule eingestellt werden, um so die Leuchtweite der Lichtbilder, die mithilfe der Lichtmodule vor dem Scheinwerfer erzeugt werden, zu modifizieren - sogenannte Leuchtweitenregelung. Eine Einstelleinrichtung 3 dient zum gleichzeitigen Einstellen der Tragrahmen 11, 21 und der darin gehaltenen Lichtmodule 10, 20 zur Leuchtweitenregelung. Die Einstelleinrichtung 3 umfasst einen Stellantrieb 31, beispielsweise in Form eines elektrisch angetriebenen Motors, der ein Getriebe 32 betätigt, welches wiederum auf die Tragrahmen 11, 21 wirkt.

Bezugnehmend auf Fig. 2 bis 4 ist das erste Lichtmodul 10 in einem ersten Tragrahmen 11 gehalten und darin fixiert. Der erste Tragrahmen 11 ist über z.B. zwei Lagerpunkte 12, 13 in dem Gehäuse 2 gelagert und um eine durch die Lagerpunkte 12, 13 definierte, vorzugsweise horizontale Achse a1 schwenkbar, wodurch ein Verkippen, insbesondere Neigen, des Lichtmoduls 10 bewirkt werden kann. Die Stellung (Neigung) bezüglich der Achse a1 ist über einen außerhalb dieser Achse liegenden dritten Lagerpunkt des Tragrahmens 11, nämlich der Ankopplungsstelle 19, einstellbar, wie weiter unten näher beschrieben ist. In ähnlicher Weise ist das zweite Lichtmodul 20 in einem zweiten Tragrahmen 21 gehalten und darin fixiert, beispielsweise unterhalb des ersten Lichtmoduls 10. Er ist mittels z.B. zwei Lagerpunkten (von denen in den Figuren nur ein Lagerpunkt 22 sichtbar ist) in dem Gehäuse 2 gelagert; diese Lagerpunkte definieren eine vorzugsweise horizontale Achse a2, um die der zweite Tragrahmen 21 schwenkbar ist. Somit kann auch das zweite Lichtmodul 20 um die Achse a2 geneigt (gekippt) werden, wobei die Stellung (Neigung) bezüglich der Achse a2 über eine außerhalb dieser Achse liegenden Ankopplungsstelle 29 in Form einer Gelenkankopplung 29 des Tragrahmens 21 einstellbar ist, wie weiter unten näher beschrieben ist.

Der zweite Tragrahmen 21 dient auch als Kühlkörper für das zweite Lichtmodul 20 und besteht bevorzugt aus metallischem Material, z.B. Aluminium. Der erste Tragrahmen 11 kann aus Aluminium oder Kunststoffmaterial hergestellt sein. In anderen (nicht gezeigten) Ausführungsvarianten kann auch der erste Tragrahmen so wie der zweite Tragrahmen jeweils als Kühlkörper dienen, oder beide Tragrahmen sind ohne Kühlwirkung vorgesehen. Das Material der Tragrahmen wird abhängig von der gewünschten Anwendung ausgewählt, z.B. Kunststoff, Aluminium, oder anderem metallischem Material oder Leichtmetall.

Zum Einstellen der Neigungsstellung der beiden Tragrahmen 11, 21 ist erfindungsgemäß eine Einstelleinrichtung 3 mit einem Stellantrieb und einem Getriebe 32 vorgesehen, das an den erwähnten Ankopplungsstellen 19, 29 über jeweilige Gelenkankopplungen mit den Tragrahmen 11, 21 verbunden ist.

Der Stellantrieb 31 ist beispielsweise ein elektrisch betriebener Linearmotor. Der Stellantrieb 31 treibt z.B. eine horizontal verlaufende Stellstange 33, an deren Ende ein Gelenkkopf 34 ausgebildet ist. Der Gelenkkopf 34 greift in ein Kugelgelenk 30 ein, über das die Bewegung des Stellantriebs 31 bzw. die Stellung der Stellstange 33 auf das Getriebe 32 einschließlich des ersten Tragrahmens 11 übertragen wird, wie nachstehend beschrieben wird. Anstelle eines elektrischen Antriebs können auch andere Lösungen zweckmäßig sein, z.B. hydraulischer Art oder durch Piezo-Motor, oder ein manueller Antrieb, z.B. über ein Stellrad.

Das Kugelgelenk 30 bildet erfindungsgemäß einen Knotenpunkt des Getriebes 32, über den getriebemäßig die Stellbewegung bzw. genauer gesagt Stellauslenkung, die durch den Stellantrieb 31 eingeprägt wird, in entsprechende Kinematik der Ankopplungsstellen 19, 29 der Tragrahmen weitergeleitet wird. Das Kugelgelenk 30 enthält neben dem Gelenkkopf 34 den Tragrahmen 11, 21 jeweils zugeordnete Anbindungselemente 14, 24 in einer konzentrischen Anordnung. In der gezeigten Ausführungsform ist das ("zweite") Anbindungselement 24, das dem zweiten Tragrahmen 21 zugeordnet ist, als eine innere Gelenkschale gestaltet und bildet einen Teil eines L-förmigen Koppelbauteils 26. Die innere Gelenkschale 24 hat eine becherartige Form, deren Innenseite eine kugelschalenartige Gelenkfläche ausbildet, welche eine Kugelpfanne zur Aufnahme des Gelenkkopfes 34 bildet. Hierdurch ist eine innere Gelenkverbindung hergestellt. Die innere Gelenkschale 24 weist zudem an ihrer Außenseite eine kugelkopfartige Gelenkfläche auf, die konzentrisch mit der nach innen gewandten kugelschalenartigen Gelenkfläche ist. Die innere Gelenkschale 24 ist in dem als äußere Gelenkschale ausgebildeten ("ersten") Anbindungselement 14 des ersten Tragrahmens 11 aufgenommen und bildet somit eine äußere Gelenkverbindung. Die innere und die äußere Gelenkverbindung bilden auf diese Weise gemeinsam das erfindungsgemäße mehrschalig konzentrische Kugelgelenk. In Fig. 4 sind die Gelenkschalen 14, 24 im Schnitt dargestellt, um die Position der Komponenten im Kugelgelenk 30 zu verdeutlichen.

Das erste Anbindungselement 14 ist in der Ankopplungsstelle 19 des ersten Tragrahmens eingesetzt und dort starr befestigt. Durch die starre Befestigung ergibt sich eine direkte Lagerung im Knotenpunkt des Kugelgelenks 30, was Winkelfehler effizient unterdrückt. Die Ankopplungsstelle 19 ist vorzugsweise als Ausnehmung an der Außenseite des ersten Tragrahmens 11 ausgebildet, beispielsweise an dessen Unterseite, und vorzugsweise mittig am Tragrahmen.

Zweckmäßigerweise kann die äußere Gelenkschale 14 eine becherartige Formgebung mit einem seitlichen Schlitz 15 aufweisen, um der Stellstange 33 den Zugang zum Innenraum von der Seite zu ermöglichen. Ähnlich kann in der becherartigen Form der inneren Gelenkschale 24 ein seitlicher Schlitz 25 vorgesehen sein, durch den die Stellstange 33 hindurch verläuft. Die beiden becherartigen Formen der Gelenkschalen 14, 24 sind bevorzugt koaxial entlang einer Achse a3, die beispielsweise vertikal verläuft. Im Zuge der Montage werden die beiden Gelenkschalen 14, 24 durch eine Bewegung entlang dieser Achse a3 ineinander gesteckt, wobei freilich zuvor die beiden Schlitze 15, 25 übereinander ausgerichtet werden und der Kugelkopf 34 eingelegt wird, und danach schließen die beiden Gelenkschalen den Kugelkopf 34 im Zentrum des Kugelgelenks 30 ein, wobei die beiden Schlitze 15, 25 im montierten Zustand des Gelenks übereinander liegen und ein Fenster 44 bilden, durch das die Stellstange 33 verläuft. Das Fenster 44 ist kleiner als der Durchmesser des Kugelkopfes 34. Somit ist der Kugelkopf 34 durch Formschluss gegen ein Herausziehen aus dem Kugelgelenk 30, das durch die Bauteile 14, 24, 34 gebildet ist, gesichert. Der Stellantrieb wirkt dagegen in einer Richtung quer zur Achse a3. Die Bewegung des Stellantriebs bewirkt daher eine kinematische Zwangsbewegung des Kugelgelenks und der darin angebundenen Komponenten, d.s. die Anbindungselemente 14, 24.

Wie bereits erwähnt ist das zweite Anbindungselement 24 (hier als innere Gelenkschale) Teil eines Koppelbauteils 26. Dieses setzt die horizontale Bewegung der inneren Gelenkschale 24 in eine vertikale Bewegung um und ist über ein Koppelelement 27 mit der Gelenkankopplung 29 des zweiten Tragrahmens 21 verbunden. Dadurch ist ein Untergetriebe in Form einer Kopplungsmechanik 28 gebildet, welche die Auslenkung des Kugelgelenks 30, genauer der Gelenkschale 24, auf die Gelenkankopplung 29 überträgt und so in eine Schwenkbewegung des zweiten Tragrahmens 21 umsetzt. Das Koppelelement 27 ermöglicht das Spiel zwischen Koppelbauteil 26 und Gelenkankopplung 29 in horizontaler Richtung bei der vertikalen Bewegung an dieser Gelenkverbindung.

In einer vereinfachten Ausführungsvariante kann das Koppelelement 27 entfallen bzw. mit dem Koppelbauteil einstückig sein; dies verringert zusätzlich die Anzahl der Getriebekomponenten. Somit ist in dieser Variante das zweite Anbindungselement 24 als Koppelbauteil 26 direkt mit der Gelenkankopplung 29 des zweiten Tragrahmens verbunden. Ein gegebenenfalls nötiges Spiel an der Gelenkankopplung 29 kann durch andere Maßnahmen, z.B. eine Schlitzführung, erreicht werden.

In dem gezeigten Ausführungsbeispiel sind die Komponenten 26, 27 der Kopplungsmechanik 28 beispielsweise aus Stahl (z.B. Edelstahl) hergestellt, ebenso wie die Stellstange 33 einschließlich des Kugelkopfes 34, während die äußere Gelenkschale 14 z. B. aus Aluminium gefertigt ist.

Das Getriebe 32 kann zudem, wie in den Fig. 2 bis 4 gezeigt ist, eine Verstelleinrichtung 35 für die Kopplungsmechanik 28 aufweisen. Die Verstelleinrichtung 35 bildet z.B. eine verstellbare Lagerung (Drehpunkt) 23 des Koppelbauteils 26. Durch ein Verschieben der Position der Lagerung 23 ergibt sich ein Verstellen der relativen Einstellung der Lichtmodule 11, 21 zueinander. Die Verstelleinrichtung 35 der gezeigten Ausführungsform wird manuell eingestellt, z.B. während des Montagevorgangs des Scheinwerfers 1 durch ein Stellrad 36; natürlich kann in einer Variante die Verstelleinrichtung auch auf andere Weise, z.B. durch einen Aktor angetrieben sein. Die Verstelleinrichtung 35 ist beispielsweise aus Aluminium hergestellt und kann auf beliebige, dem Fachmann bekannte Weise ausgebildet sein, beispielsweise wie in DE 10 2010 022 847 der Anmelderin beschrieben.

Sofern gewünscht können in anderen Ausführungsform der Erfindung auch weitere Einrichtungen vorgesehen sein, um ein zusätzliches Verschwenken der Tragrahmen um andere Achsen, ausführen zu können, beispielsweise um eine Vertikalachse (nicht gezeigt), um ein laterales Einstellen des Ortes des Lichtbildes zu ermöglichen.

Es versteht sich, dass die Erfindung nicht auf das hier gezeigte Ausführungsbeispiel beschränkt ist. Insbesondere ist es denkbar, dass die Komponenten 14, 24, 34 hinsichtlich ihrer "zwiebelschalenartigen" Anordnung in dem erfindungsgemäßen mehrschaligen Kugelgelenk in anderer relativer Reihenfolge sein können. Beispielsweise können die beiden Gelenkschalen 14, 24 gegeneinander vertauscht sein, sodass die Gelenkschale des ersten Anbindungselements in der Gelenkschale des zweiten liegt; weiterhin wäre die innere Gelenkschale mit der Ankopplungsstelle des zugeordneten Tragrahmens starr verbunden. In einer anderen Variante kann das Anbindungselement des Antriebs als Gelenkschale ausgebildet sein, während ein Anbindungselement eines der Tragrahmen ein zentraler Gelenkkopf ist. Zudem können die Rollen der beiden Lichtmodule bzw. Tragrahmen gegeneinander vertauscht werden.

## Patentansprüche

1. Scheinwerfer, insbesondere Kraftfahrzeugscheinwerfer, mit
- einem Gehäuse (2),
- einer Anzahl von in dem Gehäuse verstellbar gelagerten Tragrahmen (11, 21), in denen jeweils ein optisches Bauelement (10, 20) gehalten ist, nämlich einem ersten Tragrahmen (11) sowie zumindest einem weiteren Tragrahmen (21), und
- einer Einstelleinrichtung (3), welche zum gemeinsamen Verstellen der Tragrahmen (11, 21) durch Verschwenken um jeweils zumindest eine Achse (a1, a2) relativ zu dem Gehäuse (2) eingerichtet ist,
wobei die Einstelleinrichtung (3) ein durch einen Stellantrieb (31) betätigtes Getriebe (32) umfasst, das mit den Tragrahmen (11, 21) jeweils über eine Gelenkankopplung verbunden ist,
und wobei
das Getriebe (32) ein mehrschalig konzentrisches Kugelgelenk (30) aufweist, in dem ein Anbindungselement (34) des Stellantriebs (31) sowie jeweils einem der Tragrahmen (11, 21) zugeordnete Anbindungselemente (14, 24) konzentrisch gekoppelt sind,
wobei für den bzw. jeden der weiteren Tragrahmen (21) das diesem zugeordnete Anbindungselement (24) unmittelbar oder getriebemäßig mit der Gelenkankopplung (29) des jeweiligen Tragrahmens verbunden ist, **dadurch gekennzeichnet, dass** das Anbindungselement (14) des ersten Tragrahmens (11) mit dem ersten Tragrahmen (11) starr verbunden ist.

2. Scheinwerfer nach Anspruch 1, **dadurch gekennzeichnet, dass** das Kugelgelenk (30) in einer Ausnehmung (19) des ersten Tragrahmens (11) aufgenommen ist.

3. Scheinwerfer nach Anspruch 1 oder 2, **dadurch gekennzeichnet, dass** der bzw. jeder der weiteren Tragrahmen (21) mit dem ihm jeweils zugeordneten Anbindungselement (24) über ein Untergetriebe (28) verbunden ist.

4. Scheinwerfer nach Anspruch 3, **dadurch gekennzeichnet, dass** das Untergetriebe (28) eine Verstelleinrichtung (35) aufweist, die dazu eingerichtet ist, den Ort (23) der Lagerung eines Koppelbauteils (26) des Untergetriebes zu verstellen.

5. Scheinwerfer nach Anspruch 3 oder 4, **dadurch gekennzeichnet, dass** das Untergetriebe (28) als Koppelgetriebe ausgeführt ist. [offene kinematische Kette]

6. Scheinwerfer nach einem der vorhergehenden Ansprüche, **dadurch gekennzeichnet, dass** das Anbindungselement (34) des Stellantriebs (31) als im Zentrum des Kugelgelenks (30) angeordneter Gelenkkopf ausgebildet ist.

7. Scheinwerfer nach Anspruch 6, **dadurch gekennzeichnet, dass** im montierten Zustand des Kugelgelenks (30) das Anbindungselement (14) des ersten Tragrahmens (11) zusammen mit einem weiteren Anbindungselement (24) den Gelenkkopf (34) umgibt, wobei ein Herausziehen des Gelenkkopfes (34) aus dem Kugelgelenk durch Formschluss unterbunden ist.

8. Scheinwerfer nach einem der vorhergehenden Ansprüche, **dadurch gekennzeichnet, dass** die optischen Bauelemente (10, 20) Lichtmodule mit zumindest einer Lichtquelle sind.

## Claims

1. Headlamp, in particular motor vehicle headlamp, comprising
- a housing (2),
- a number of supporting frames (11, 21), namely, a first supporting frame (11) and at least one further supporting frame (21), which are adjustably mounted in the housing and which support respective optical components (10, 20), and
- an adjusting device (3) configured to jointly adjust the supporting frames (11, 21) by swivelling around at least one axis (a1, a2) relative to the housing (2),
wherein the setting device (3) comprises a gear (32) actuated by an actuator (31), said gear being connected to the supporting frames (11, 21) via respective articulated couplings, and wherein the gear (32) has a concentric multiple spherical bearing (30), in which a connecting element (34) of the actuator (31) and connecting elements (14, 24), which are respectively associated with the supporting frames (11, 21), are concentrically coupled,
wherein for the or for each of the further supporting frame(s) (21) the respectively associated connecting element (24) is, directly or gear-wise, connected to the joint coupling (29) of the respective supporting frame,
**characterised in that** the connecting element (14) of the first supporting frame (11) is rigidly connected to the first supporting frame (11).

2. Headlamp according to claim 1, **characterized in that** the ball joint (30) is accommodated in a recess (19) of the first support frame (11).

3. Headlamp according to claim 1 or 2, **characterized in that** the or each of the further supporting frame(s) (21) is connected to the respectively associated connecting element (24) via a sub-gear (28).

4. Headlamp according to claim 3, **characterized in that** the sub-gear (28) comprises an adjusting device (35) configured to adjust the location (23) of the bearing of a coupling component (26) of the sub-gear.

5. Headlamp according to claim 3 or 4, **characterized in that** the sub-gear (28) is realized as a coupling gear. [open kinematic chain]

6. Headlamp according to any one of the preceding claims, **characterized in that** the connecting element (34) of the actuator (31) is realized as a joint head arranged in the centre of the spherical bearing (30).

7. Headlamp according to claim 6, **characterized in that**, in the assembled state of the ball joint (30), the connecting element (14) of the first supporting frame (11), together with a further connecting element (24), surrounds the joint head (34), preventing a pulling-out motion of the joint head (34) from the spherical bearing by positive locking.

8. Headlamp according to any one of the preceding claims, **characterized in that** the optical components (10, 20) are light modules having at least one light source.

## Revendications

1. Projecteur, notamment projecteurs de véhicule automobile, comprenant
- un boîtier (2),
- un nombre de cadres de support (11, 21), à savoir un premier cadre de support (11) et au moins un autre cadre de support (21), lesquels sont montés de manière réglable dans le boîtier et dans lesquels composants optiques (10, 20) respectifs sont supportés, et
- un dispositif de réglage (3), adapté pour ajuster conjointement les cadres de support (11, 21) en pivotant autour d'au moins un axe (a1, a2) par rapport au boîtier (2),
dans lequel le dispositif de réglage (3) comprend une transmission (32) actionnée par un actionneur (31) qui est relié aux cadres de support (11, 21) par accouplements articulés respectifs, et dans lequel la transmission (32) comporte une articulation sphérique multiple concentrique (30) dans laquelle un élément de raccord (34) de l'actionneur (31) et des éléments de raccord (14, 24) associés à un respectif des cadres de support (11, 21) sont couplés de manière concentrique,
dans lequel, pour le ou pour chacun des autre(s) cadre(s) de support (21), l'élément de raccord associé (24) est relié directement ou par transmission avec l'accouplement articulé (29) de le cadre de support respectif,
**caractérisé en ce que** l'élément de raccord (14) du premier cadre de support (11) est fixé rigidement au premier cadre de support (11).

2. Projecteur selon la revendication 1, **caractérisé en ce que** l'articulation sphérique (30) est logée en un évidement (19) du premier cadre de support (11).

3. Projecteur selon la revendication 1 ou 2, **caractérisé en ce que** le ou chacun des autre(s) cadre(s) de support (21) est relié à l'élément de raccord associé (24) respectif par une transmission partielle (28).

4. Projecteur selon la revendication 3, **caractérisé en ce que** la transmission partielle (28) comprend un dispositif de réglage (35) adapté pour ajuster l'emplacement (23) du palier d'un élément d'accouplement (26) de la transmission partielle.

5. Projecteur selon la revendication 3 ou 4, **caractérisé en ce que** le transmission partielle (28) est réalisé comme transmission d'accouplement. [chaîne cinématique ouverte]

6. Projecteur selon l'une quelconque des revendications précédentes, **caractérisés en ce que** l'élément de raccord (34) de l'actionneur (31) est en forme d'une tête de l'articulation disposée au centre de l'articulation sphérique (30).

7. Projecteur selon la revendication 6, **caractérisé en ce que**, à l'état monté de l'articulation sphérique (30), l'élément de raccord (14) du premier cadre de support (11), ainsi qu'un autre élément de raccord (24), entoure la tête de l'articulation (34), ainsi empêchant un détachement de la tête de l'articulation (34) hors de l'articulation sphérique par engagement positif.

8. Projecteur selon l'une quelconque des revendications précédentes, **caractérisé en ce que** les composants optiques (10, 20) sont des modules de lumière comportant au moins une source de lumière.
